# EUROPEAN PATENT APPLICATION

(11) **EP 4 560 775 A1**
(43) Date of publication of application: **28.05.2025**
(21) Application number: 24214112.5
(22) Date of filing: 20.11.2024
(51) Int. Cl.: H01M 10/42, H01M 10/48, H01M 10/613, H01M 50/211, H01M 50/242, H01M 50/264, H01M 50/383, A62C 2/00, A62C 3/00

(54) **BATTERY MODULE INCLUDING SUPPORT MEMBER INCLUDING SPRAY HOLE AND BATTERY PACK INCLUDING BATTERY MODULE**

(30) Priority: 22.11.2023 KR 20230163486
(71) Applicant: SK On Co., Ltd., Seoul 03161 (KR)
(72) Inventor: JANG, Sun Ho, 34124 Daejeon (KR)
(74) Representative: Prüfer & Partner mbB Patentanwälte · Rechtsanwälte

(57) **Abstract**

A battery pack includes a plurality of battery modules, and a pack frame accommodating the plurality of battery modules. Each of the plurality of battery modules includes a plurality of cell units each including a battery cell and a cell housing surrounding at least a portion of the battery cell, the cell housing including one or more through-holes, one or more support members inserted into the one or more through-holes and configured to support the plurality of cell units, and a fire extinguishing agent supply member connected to the one or more support members and configured to supply a fire extinguishing agent to the one or more support members. Each of the one or more support members includes a spraying hole positioned in the one or more through-holes and an internal space connected to the spraying hole and configured to provide a path for the fire extinguishing agent.

## Description

### TECHNICAL FIELD

The technology and implementations in this patent document generally relates to a battery module that includes a support member including a spraying hole, and a battery pack that includes the battery module.

### BACKGROUND

Unlike primary batteries, secondary batteries can be recharged and discharged multiple times, making them suitable for a wide range of devices, such as digital cameras, mobile phones, laptops, hybrid vehicles, electric vehicles, and energy storage systems. Types of secondary batteries include lithium-ion batteries, nickel-cadmium batteries, nickel-metal hydride batteries, or nickel-hydrogen batteries.

### SUMMARY

The disclosed technology can be implemented in some embodiments to provide a battery module that includes a plurality of cell units each including a battery cell and a cell housing supporting the battery cell. In an embodiment, the battery module can prevent thermal runaway or thermal propagation by inhibiting the spread of heat, gas, or flames generated in one of the plurality of cell units to other cell units.

The disclosed technology can be implemented in some embodiments to provide a battery module that can deliver a fire extinguishing agent to a battery cell through a support member that supports a plurality of cell units.

The disclosed technology can be implemented in some embodiments to provide a battery module that can slow fire propagation.

A battery module and a battery pack based on some embodiments of the disclosed technology may be widely applied in the field of green technology, such as electric vehicles, battery charging stations, and other battery-utilizing solar power generation schemes, wind power generation schemes, or others. In addition, the battery module and the battery pack implemented based on some embodiments of the disclosed technology may be used in eco-friendly electric vehicles, hybrid vehicles, or others to prevent climate change by reducing air pollution and greenhouse gas emissions.

In an aspect of the disclosed technology, a battery module may include a plurality of cell units each including a battery cell and a cell housing that surrounds at least a portion of the battery cell and includes one or more through-holes, one or more support members inserted into the one or more through-holes and configured to support the plurality of cell units, and a fire extinguishing agent supply member connected to the one or more support members and configured to supply a fire extinguishing agent to the one or more support members. Each of the one or more support members may include a spraying hole positioned in the one or more through-holes and configured to guide the fire extinguishing agent to the cell unit, and an internal space connected to the spraying hole and configured to provide a path for the fire extinguishing agent.

The battery module may further include one or more fastening members connecting the one or more support members to the fire extinguishing agent supply member. Each of the one or more fastening members may include an external surface including at least a portion that includes a thread in contact with each of the one or more support members. Each of the one or more support members includes an internal surface in contact with the fire extinguishing agent supply member, and one or more fluid path holes formed on the internal surface.

Each of the fastening members may include a head portion surrounding at least a portion of the extinguishing agent supply member, and a protrusion portion extending from the head portion and inserted into the internal space of each of the one or more support members.

The fire extinguishing agent supply member may include an inlet configured to receive the fire extinguishing agent from outside the battery module, and an outlet configured to supply the fire extinguishing agent to the one or more support members.

The battery module may further include a fire extinguishing agent tank connected to the fire extinguishing agent supply member and configured to accommodate the fire extinguishing agent.

The battery module may further include a cover member disposed in the spraying hole. A first melting point of the cover member may be lower than a second melting point of the support member.

The support member and the fire extinguishing agent supply member may be configured to accommodate at least a portion of the fire extinguishing agent in a normal state. In some implementations, the term "normal state" refers to a condition where no fire is present in the battery cell.

The battery module may further include a valve connected to the fire extinguishing agent supply member and configured to control a flow of the fire extinguishing agent from the fire extinguishing agent supply member to the one or more support members.

The battery module may further include a sensor module configured to detect information on the battery module, including at least one of: flames, sparks, or gas in the battery module or a temperature of the battery module, and a processor configured to control opening and closing of the valve based on the information on the battery module detected by the sensor module,.

The fire extinguishing agent may flow through the fire extinguishing agent supply member, the internal space, and the spraying hole to reach the battery cell.

The battery module may further include an end plate disposed at both sides of each of the plurality of cell units, the end plate including a fastening hole configured to accommodate the support member.

The cell housing may include a first cell housing portion and a second cell housing portion spaced apart from the first cell housing portion. The one or more through-holes may include at least one first through-hole formed in the first cell housing portion, and at least one second through-hole formed in the second cell housing portion. The one or more support members may include at least one first support member inserted into the at least one first through-hole, and at least one second support member inserted into the at least one second through-hole.

The battery cell may include an electrode assembly, a pouch including an electrode accommodation portion accommodating the electrode assembly and a sealing portion sealing at least a portion of a circumference of the electrode accommodation portion, and an electrode tab connected to the electrode assembly. The cell housing may surround at least a portion of the pouch.

In another aspect of the disclosed technology, a battery pack may include a plurality of battery modules, and a pack frame configured to accommodate the plurality of battery modules. Each of the plurality of battery modules may include a plurality of cell units, each of the plurality of cell units including a battery cell and a cell housing that surrounds at least a portion of the battery cell and includes a through-hole, one or more support members inserted into the one or more through-holes and configured to support the plurality of cell units, and a fire extinguishing agent supply member connected to the one or more support members and configured to supply a fire extinguishing agent to the one or more support members. Each of the support members may include a spraying hole positioned in the one or more through-holes and configured to guide the fire extinguishing agent to the cell unit, and an internal space connected to the spraying hole and configured to provide a path for the fire extinguishing agent.

The battery pack may further include a fire extinguishing agent tank connected to the fire extinguishing agent supply member and configured to accommodate the fire extinguishing agent, and a pump configured to generate pressure to move the fire extinguishing agent from the fire extinguishing agent tank to the fire extinguishing agent supply member.

The battery module implemented based on an embodiment of the disclosed technology may extinguish a fire before it spreads.

In an embodiment of the disclosed technology, heat propagation between battery cells may be prevented or delayed.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell based on an embodiment.
FIG. 2 is a plan view of a cell unit based on an embodiment.
FIG. 3 is a perspective view of a battery module based on an embodiment.
FIG. 4 is an exploded perspective view of a battery module based on an embodiment.
FIG. 5 is a perspective view of connection between a support member and a fire extinguishing agent supply member based on an embodiment.
FIG. 6 is a diagram illustrating a spray path of a fire extinguishing agent for a cell unit based on an embodiment.
FIG. 7 is a perspective view of a fastening member based on an embodiment.
FIG. 8 is a schematic cross-sectional view of a fastening member based on an embodiment.
FIG. 9 is a perspective view of a support member based on an embodiment.
FIG. 10A is a cross-sectional view of a support member based on an embodiment. FIG. 10B is a cross-sectional view of a support member based on another embodiment.
FIG. 11 is a schematic diagram of a battery module in a normal state based on an embodiment.
FIG. 12 is a schematic diagram of a battery module in a state of combustion based on an embodiment.
FIG. 13 is a schematic diagram of a battery module in a normal state based on an embodiment.
FIG. 14 is a schematic diagram of a battery module in a state of combustion based on an embodiment.
FIG. 15 is a perspective view of a battery pack based on an embodiment.

### DETAILED DESCRIPTION

Features of the disclosed technology disclosed in this patent document are described by example embodiments with reference to the accompanying drawings.

The disclosed technology can be implemented in some embodiments to provide a battery module that includes a support member including a spraying hole and a battery pack that includes the battery module.

The following disclosure provides a detained description with reference to the accompanying drawings. However, the embodiments are merely examples, and the disclosed technology is not limited to specific embodiments.

Lithium secondary batteries may be manufactured as flexible pouch-type battery cells, rigid prismatic battery cells, or cylindrical can-type battery cells. A plurality of battery cells may be stacked to form a cell assembly.

A cell assembly may be disposed in a case to form a battery module, and a plurality of battery modules may be disposed in a pack housing to form a battery pack. The battery pack may be used in various applications, such as vehicles or energy storage systems.

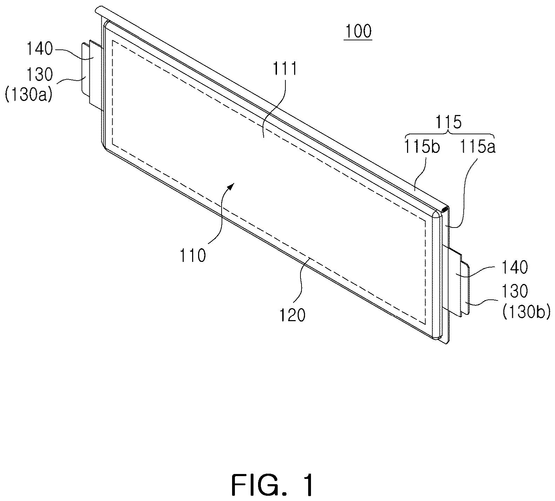

FIG. 1 is a perspective view of a battery cell based on an embodiment.

Referring to FIG. 1, a battery cell 100 may include a pouch 110, an electrode assembly 120, and an electrode tab 130. The battery cell 100 may be a secondary battery. For example, the battery cell 100 may be a lithium-ion battery, but the disclosed technology is not limited thereto. For example, the battery cell 100 may be a nickel-cadmium battery, a nickel-metal hydride battery, or a nickel-hydrogen battery that may be recharged and discharged multiple times.

The pouch 110 may form at least a portion of an exterior of the battery cell 100. The pouch 110 may include an electrode accommodation portion 111 accommodating the electrode assembly 120, and a sealing portion 115 sealing at least a portion of a circumference of the electrode accommodation portion 111. The electrode accommodation portion 111 may provide a space in which the electrode assembly 120 and an electrolyte are accommodated.

The sealing portion 115 may be formed by bonding of at least a portion of a circumference of the pouch 110. The sealing portion 115 may be in the form of a flange extending outward from the electrode accommodation portion 111, which serves as a container for electrodes, and may be disposed along at least a portion of an outer perimeter of the electrode accommodation portion 111. In an embodiment, the sealing portion 115 may include a first sealing portion 115a in which the electrode tab 130 is positioned, and a second sealing portion 115b in which the electrode tab 130 is not positioned. A portion of the electrode tab 130 may be drawn out or exposed to the outside of the pouch 110. In a position in which the electrode tab 130 is drawn out, an insulating film 140 may cover the electrode tab 130 to both enhance the sealing of the first sealing portion 115a and maintain the electrical insulation. The insulating film 140 may include a film material that is thinner than the electrode tab 130, and may be attached to both surfaces of the electrode tab 130.

In an embodiment, the electrode tabs 130 may be disposed at both sides of the battery cell 100 in a length direction to be oriented in opposite directions. For example, the electrode tab 130 may include a cathode tab 130a having a first polarity (e.g., a cathode) toward one side of the battery cell 100 in the length direction, and an anode tab 130b having a second polarity (e.g., an anode) toward the other side of the battery cell 100 in the length direction. In the example configuration illustrated in FIG. 1, the sealing portion 115 may include two first sealing portions 115a on which the electrode tab 130 is disposed and one second sealing portion 115b on which the electrode tab 130 is not disposed. The first sealing portion 115a may seal at least a portion of the electrode tab 130. In an embodiment, the electrode tab 130 may be referred to as an electrode lead.

The orientation of the electrode tab 130 may be selectively designed. In an embodiment (e.g., FIG. 1), the electrode tab 130 may include a first electrode tab 130a, and a second electrode tab 130b positioned in an opposite direction of the first electrode tab 130a with respect to the electrode assembly 120. As shown in FIG. 1, in some implementations, the electrode tabs 130 is disposed at both sides of the battery cell 100 in the length direction (e.g., Y-axis direction) to be oriented in opposite directions, but the structure of the electrode tabs 130 is not limited thereto. For example, two electrode tabs 130 may be arranged to be substantially parallel to each other in the length direction (e.g., Y-axis direction) of the battery cell 100.

As illustrated in FIG. 1, the pouch 110 is not limited to a structure where the sealing portion 115 is formed on three surfaces obtained by folding one sheet of exterior material.

In an embodiment of the disclosed technology, at least a portion of the sealing portion 115 may be folded at least once. At least a portion of the sealing portion 115 may be folded, thereby improving bonding reliability of the sealing portion 115 and minimizing an area of the sealing portion 115. The second sealing portion 115b of the sealing portion 115 based on an embodiment, on which the electrode tab 130 is not disposed, may be folded twice and then fixed by an adhesive member (not illustrated). The angle or the number of bends in the second sealing portion 115b may be adjusted. For example, in an embodiment, the second sealing portion 115b may be folded at 90° angle relative to the first sealing portion 115a.

The electrode assembly 120 may include a cathode plate, an anode plate, and a separator. The separator may prevent contact between the cathode plate and the anode plate. In some implementations, the electrode assembly 120 may be manufactured using various methods. In embodiments, a cathode, an anode, and a separator may be repeatedly disposed to form an electrode assembly. In some embodiments, the electrode assembly may be a winding-type electrode assembly, a stacking-type electrode assembly, a Z-folding-type electrode assembly, or a stack-folding-type electrode assembly.

The structure of the battery cell 100 illustrated in FIG. 1 is only an example. For example, in FIG. 1, the battery cell 100 is described as a pouch-type battery cell, but the structure of the battery cell 100 is not limited thereto. For example, the battery cell 100 may be a cylindrical battery cell or a prismatic battery cell.

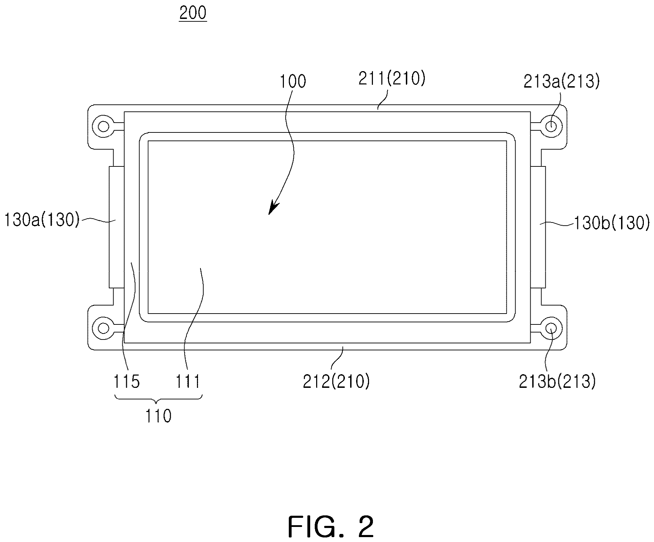

FIG. 2 is a plan view of a cell unit based on an embodiment.

Referring to FIG. 2, a cell unit 200 may include a cell housing 210 and a battery cell 100 engaged to the cell housing 210. At least a portion of the descriptions of the battery cell 100 of FIG. 1 may be applied to the battery cell 100 of FIG. 2.

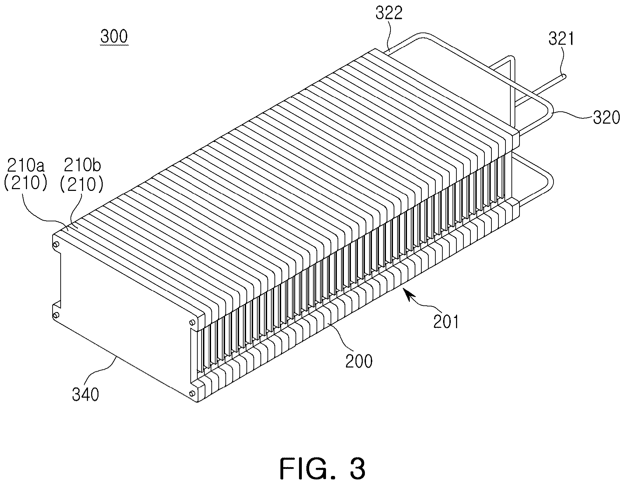

The cell housing 210 may accommodate and hold the battery cell 100 in place. The cell housing 210 may provide an empty space to accommodate the battery cell 100. The cell housing 210 may surround at least a portion of the pouch 110 of the battery cell 100. The cell housing 210 may protect the battery cell 100 from an external impact of the cell unit 200. The cell housing 210 may form at least a portion of an exterior of the cell unit 200. Due to the cell housing 210, a structure (e.g., a module case), required by a battery module (e.g., a battery module 300 of FIG. 3), may be omitted. In an embodiment, the cell housing 210 may be referred to as a cell cartridge.

In an embodiment, the battery module 300 includes one or more housings 210. The one or more housings may include a first cell housing 210a and a second cell housing 210b disposed adjacent each other in a stacking direction of the plurality of battery cells 100. In an embodiment, the cell housing 210 may include a plurality of cell housing portions, spaced apart from each other. For example, each of at least one of the one or more cell housings 210 may include a first cell housing portion 211 and a second cell housing portion 212 spaced apart from the first cell housing portion 211. In an embodiment, the first housing portion 211 surrounds at least a portion of the battery cell 100 and the second housing portion 212 surrounds at least another portion of the battery cell 100. For example, the first housing portion 211 disposed upper side portion of the battery cell 100 and the second housing portion 212 disposed lower side portion of the battery cell 100.

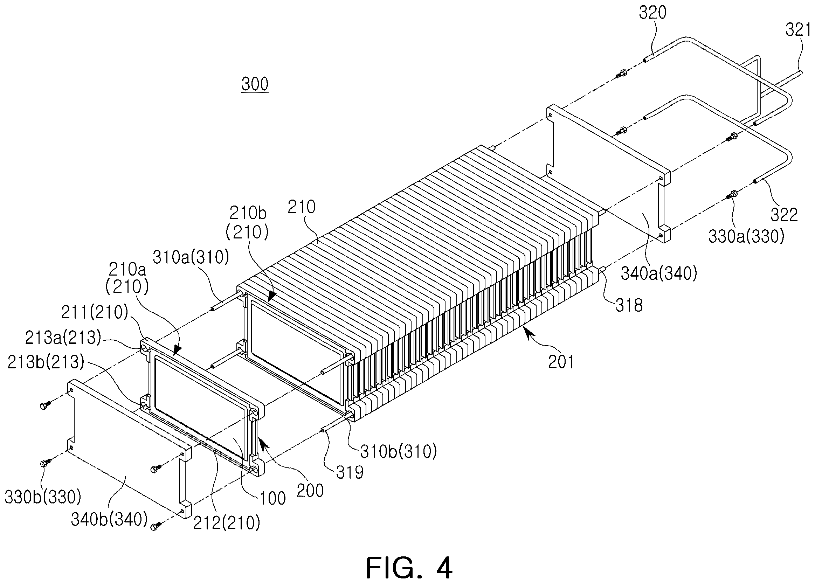

The cell housing 210 may be connected to a support member (e.g., a support member 310 of FIG. 4). For example, the cell housing 210 may include a through-hole 213 for accommodating the support member 310 by allowing the support member 310 to be inserted and held by the through-hole 213. In an embodiment, the cell housing 210 may include different through-holes 213 for accommodating different support members 310. For example, the through-hole 213 may include at least one first through-hole 213a formed in the first cell housing portion 211, and at least one second through-hole 213b formed in the second cell housing portion 212.

In an embodiment of the disclosed technology, the cell housing 210 accommodates one or more battery cells 100, but the number of battery cells 100 accommodated in the cell housing 210 may vary. For example, in an embodiment, the cell housing 210 may accommodate a plurality of battery cells 100 (e.g., two or more battery cells 100).

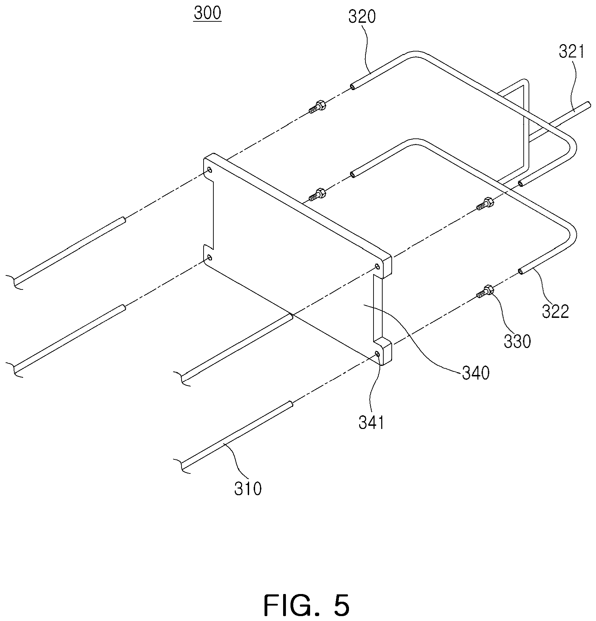

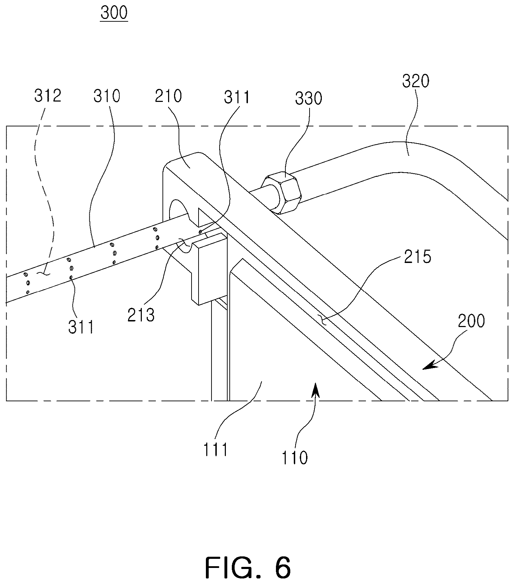

FIG. 3 is a perspective view of a battery module based on an embodiment. FIG. 4 is an exploded perspective view of a battery module based on an embodiment. FIG. 5 is a perspective view of connection between a support member and a fire extinguishing agent supply member based on an embodiment. FIG. 6 is a diagram illustrating a spray path of a fire extinguishing agent for a cell unit based on an embodiment. In FIG. 6, certain components, such as a portion of an end plate 340 and a cell unit 200 of a battery module 300, are omitted for ease of description.

Referring to FIGS. 3, 4, 5, and/or 6, the battery module 300 may include a plurality of cell units 200, a support member 310, a fire extinguishing agent supply member 320, a fastening member 330, and an end plate 340. At least a portion of the descriptions of the battery cell 100 and the cell unit 200 of FIGS. 1 and/or 2 may be applied to the battery cell 100 and/or the cell unit 200 of FIGS. 3, 4, and/or 6.

The support member 310 may support the plurality of cell units 200. For example, the support member 310 may be inserted into a through-hole 213 of each of the plurality of cell units 200. Positions of the plurality of cell units 200 may be fixed by the support member 310. In an embodiment, the support member 310 may be referred to as a stay bar. The plurality of cell units 200, fixed by the support member 310, may be referred to as sub-battery module 201.

The support member 310 may be formed of a material for maintaining rigidity of the battery module 300. For example, the support member 310 may include stainless steel.

The support member 310 may be provided as a plurality of support members 310. In an embodiment, the support member 310 may include a plurality of support members 310a and 310b, supporting the first cell housing portion 211 and the second cell housing portion 212. For example, the support member 310 may include at least one first support member 310a inserted into at least one first through-hole 213a formed in the first cell housing portion 211, and at least one second support member 310b inserted into at least one second through-hole 213b formed in the second cell housing portion 212. The number of support members 310 may be selectively designed.

The fire extinguishing agent may pass through the support member 310 which carries and moves a fire extinguishing agent to the cell unit 200. For example, the support member 310 may include one or more spraying holes 311 to allow the fire extinguishing agent to exit the support member 310 so that the fire extinguishing agent can reach the cell unit 200 to extinguish fire at the cell unit 200. As illustrated in FIG. 6, one of the spraying holes 311 may be positioned in the through-hole 213 of the cell housing 210 while other spraying holes 311 may be at other locations on the support member 311.

The support member 310 may be configured guide a flow of the fire extinguishing agent along the support member 310. For example, the support member 310 may include a hollow interior conduit with an internal space 312 for providing a path through which the fire extinguishing agent flows inside the support member 310. The support member 310 may be formed to have a tubular shape. For example, the support member 310 may include a first end 318 toward the fire extinguishing agent supply member 320 and/or the fastening member 330, and a second end 319 opposite to the first end 318. At least a portion of the fire extinguishing agent, transferred from the first end 318, may be transferred to the second end 319 along the internal space 312 of the support member 310. The internal space 312 may be an empty space formed in the support member 310. The fire extinguishing agent may pass through the internal space 312 and the spraying hole 311 of the support member 310, and may be transferred to the battery cell 100. The support member 310 may be connected to the fire extinguishing agent supply member 320 using the fastening member 330. For example, the fire extinguishing agent may be transferred to the support member 310 through the fire extinguishing agent supply member 320 and the fastening member 330. The transferred fire extinguishing agent may pass through the spraying hole 311 of the support member 310, and may be transferred to the battery cell 100 of the cell unit 200. For example, at least a portion of the fire extinguishing agent, sprayed from the spraying hole 311, may be transferred to a gap 215 between the pouch 110 and the cell housing 210. This allows any fire occurring in the battery cell 100 to be suppressed. For example, the fire extinguishing agent may be dispersed by pressure passing through the spraying hole 311 and directed toward a center of the battery cell 100.

The support member 310 may have an internal surface, forming the internal space 312. At least a portion of the internal surface of the support member 310 may be in contact with the fastening member 330. A thread for coupling with the fastening member 330 may be formed on the internal surface. In an embodiment, the fastening member 330 may be a common tapered thread.

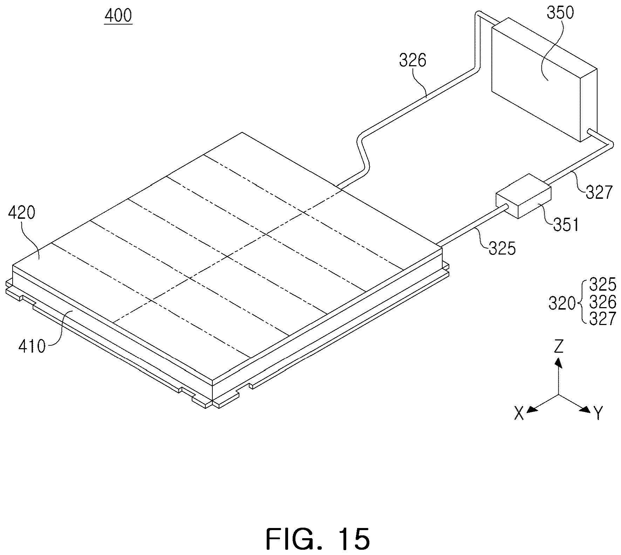

The fire extinguishing agent supply member 320 may provide a path for transferring the fire extinguishing agent to the support member 310. The fire extinguishing agent may be transferred to the fire extinguishing agent supply member 320. For example, the fire extinguishing agent supply member 320 may include an inlet 321 connected to a fire extinguishing agent tank (e.g., a fire extinguishing agent tank 350 of FIG. 15). The fire extinguishing agent supply member 320 may transfer the fire extinguishing agent to the support member 310. For example, the fire extinguishing agent supply member 320 may include an outlet 322 toward the support member 310. In an embodiment, the fire extinguishing agent supply member 320 may be referred to as a fire extinguishing agent supply pipe.

The fastening member 330 may connect the support member 310 and the fire extinguishing agent supply member 320 to each other. For example, the fastening member 330 may be connected to the first end 318 of the support member 310 and the outlet 322 of the fire extinguishing agent supply member 320.

The fastening member 330 may allow the fire extinguishing agent to move therethrough. For example, the fastening member 330 may include a fluid path hole (e.g., fluid path hole 331 of FIG. 6) providing a path through which the fire extinguishing agent flows. The fire extinguishing agent may pass through the fire extinguishing agent supply member 320 and the fastening member 330, and may be transferred to the support member 310.

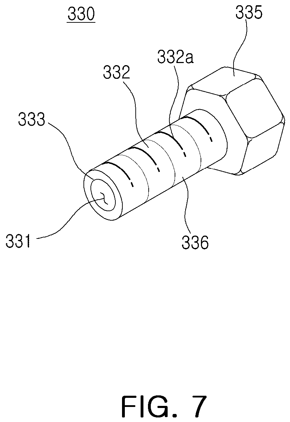

The fastening member 330 may be connected to both ends 318 and 319 of the support member 310. For example, the fastening member 330 may include a first fastening member 330a connected to the first end 318 of the support member 310, and a second fastening member 330b connected to the second end 319. The first fastening member 330a may connect the support member 310 and the fire extinguishing agent supply member 320 to each other. In an embodiment, the second fastening member 330b may connect the second end 319 of the support member 310 to a pipe (not illustrated). In another embodiment, the second fastening member 330b may seal the second end 319 without providing the fluid path hole. A structure of the fastening member 330 will be further described with reference to FIGS. 6 and 7.

The end plate 340 may form at least a portion of an exterior of the battery module 300. For example, the end plate 340 may be disposed at both sides of the sub-battery module 201. The end plate 340 may include a first end plate 340a positioned at one side of the sub-battery module 201, and a second end plate 340b positioned at the other side of the sub-battery module 201.

In an embodiment, the end plate 340 may include a fastening hole 341 for accommodating the support member 310. A portion of the support member 310 may be positioned in the fastening hole 341 of the end plate 340. The support member 310 may be inserted into the through-hole 213 of the cell housing 210 of each of the plurality of cell units 200, and the fastening hole 341 of the end plate 340. A portion (e.g., an end) of the support member 310 may pass through the through-hole 213 and the fastening hole 341 to be exposed to the outside of the end plate 340. In another embodiment, the fastening hole 341 of the end plate 340 may accommodate the fastening member 330.

For ease of description, certain components are omitted or exaggerated in some embodiments of the disclosed technology. For example, the number of battery cells 100 may be selectively designed.

In an embodiment not illustrated, the battery module 300 may include a busbar, electrically connected to the electrode tab 130 of the battery cell 100.

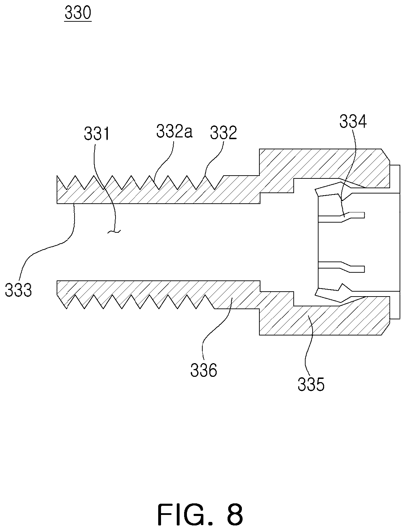

FIG. 7 is a perspective view of a fastening member based on an embodiment. FIG. 8 is a schematic cross-sectional view of a fastening member based on an embodiment.

Referring to FIG. 7 and/or FIG. 8 together with FIG. 5 and FIG. 6, a fastening member 330 may connect a support member 310 and a fire extinguishing agent supply member 320 to each other. At least a portion of the descriptions of the fastening member 330 of FIG. 4, 5 and/or FIG. 6 may be applied to the fastening member 330 of FIG. 7 and FIG. 8.

The fastening member 330 may be connected to the support member 310. For example, the fastening member 330 may have an external surface 332 in contact with the support member 310. The external surface 332 may include a thread 332a. A portion of the fastening member 330 may be inserted into an internal space 312 of the support member 310, and the thread 332a of the fastening member 330 may be fastened to a thread (not illustrated) formed on an internal surface of the support member 310.

The fastening member 330 may provide a fluid path hole of the fire extinguishing agent. The fastening member 330 may include a fluid path hole 331 through which the fire extinguishing agent flows. The fluid path hole 331 may be an empty space formed by an internal surface 333 of the fastening member 330. The fire extinguishing agent, transferred from the fire extinguishing agent supply member 320, may move to the support member 310 through the fluid path hole 331.

The fastening member 330 may be connected to the fire extinguishing agent supply member 320. For example, the fastening member 330 may include a connector 334, connected to an outlet (e.g., an outlet 322 of FIG. 4) of the fire extinguishing agent supply member 320. The connector 334 may be formed to have a structure of a quick connector, and thus may be connected to the fire extinguishing agent supply member 320. The shape of the connector 334 illustrated in the drawings are only examples. In an embodiment not illustrated, the outlet 322 of the fire extinguishing agent supply member 320 may be forcibly fitted into the fastening member 330.

In an embodiment, the fastening member 330 may include a sealing member (not illustrated) for preventing leakage of the fire extinguishing agent. The sealing member may seal a gap between the support member 310, the fire extinguishing agent supply member 320, and/or the fastening member 330.

The fastening member 330 may be formed to have a bolt shape. For example, the fastening member 330 may include a head portion 335 and a protrusion portion 336 extending from a portion of the head portion 335. At least a portion of the protrusion portion 336 may be inserted into the internal space 312 of the support member 310. The thread 332a of the fastening member 330 may be formed on the protrusion portion 336. The head portion 335 may be inserted into the internal space 312 of the support member 310. The head portion 335 may be fastened to the support member 310 using the thread 332a.

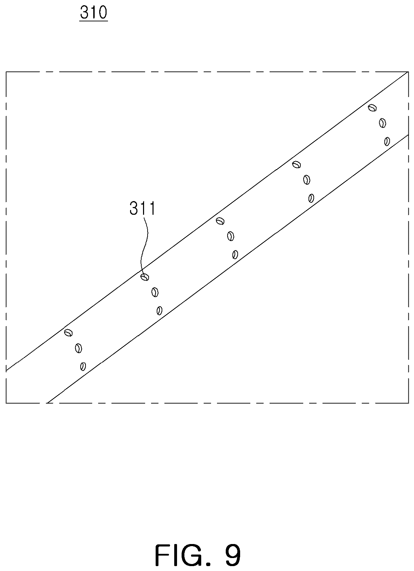

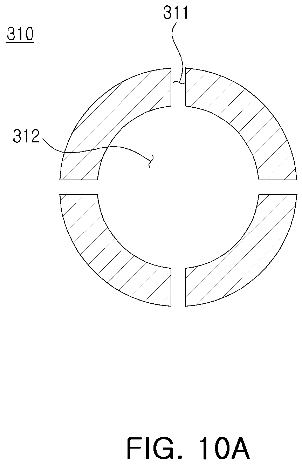

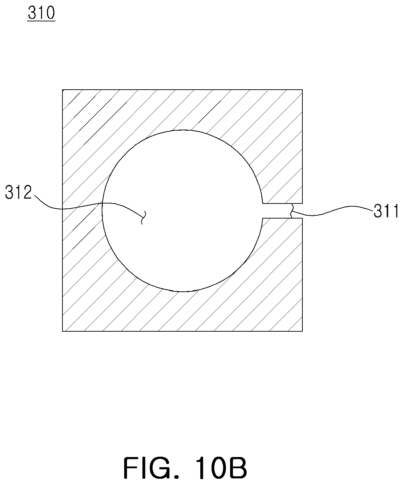

FIG. 9 is a perspective view of a support member based on an embodiment. FIG. 10A is a cross-sectional view of a support member based on an embodiment. FIG. 10B is a cross-sectional view of a support member based on another embodiment.

Referring to FIGS. 9, 10A, and/or 10B, a support member 310 may include a spraying hole 311 and an internal space 312. The descriptions of the support member 310 of FIGS. 4, 5, and/or 6 may be applied to the support member 310 of FIGS. 9, 10A, and 10B.

The spraying hole 311 of the support member 310 may be connected to the internal space 312. For example, a fire extinguishing agent, introduced into the internal space 312, may be sprayed onto the outside of the support member 310 through the spraying hole 311.

A shape of the support member 310 may be selectively designed. The shape of the support member 310 is not limited as long as the shape corresponds to a shape of a through-hole (e.g., the through-hole 213 of FIG. 2) of a cell housing (e.g., the cell housing 210 of FIG. 2).

In an embodiment (e.g., FIG. 10A), the support member 310 may spray the fire extinguishing agent at a plurality of points on substantially the same plane. The support member 310 may include a plurality of (e.g., four) spraying holes 311 positioned in a cross-section of the support member 310.

In an embodiment (e.g., FIG. 10B), the support member 310 may have a structure for spraying the fire extinguishing agent in a designated direction. For example, the support member 310 may include a single spraying hole 311 positioned in the cross-section of the support member 310. The fire extinguishing agent may be sprayed through the spraying hole 311 in the predetermined direction (e.g., toward a gap 215 between a cell housing 210 and a pouch 110), thereby improving spraying efficiency of the fire extinguishing agent.

In an embodiment (e.g., FIGS. 9 and 10A), the support member 310 may be formed to have a substantially circular cross-section. In an embodiment (e.g., FIG. 10B), the support member 310 may be formed to have a substantially rectangular cross-section and a circular internal space 312.

However, the shape of the support member 310 is not limited thereto. For example, the support member 310 may be formed to have a polygonal (e.g., a triangular, a rectangular, a pentagonal, or a hexagonal) cross-section. The through-hole 213 of the cell housing 210 of FIG. 2 may be formed to have a shape corresponding to a shape of the cross-section of the support member 310.

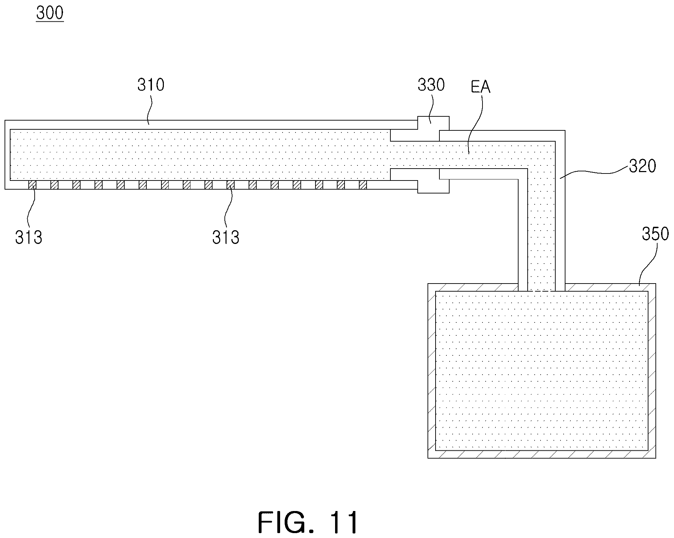

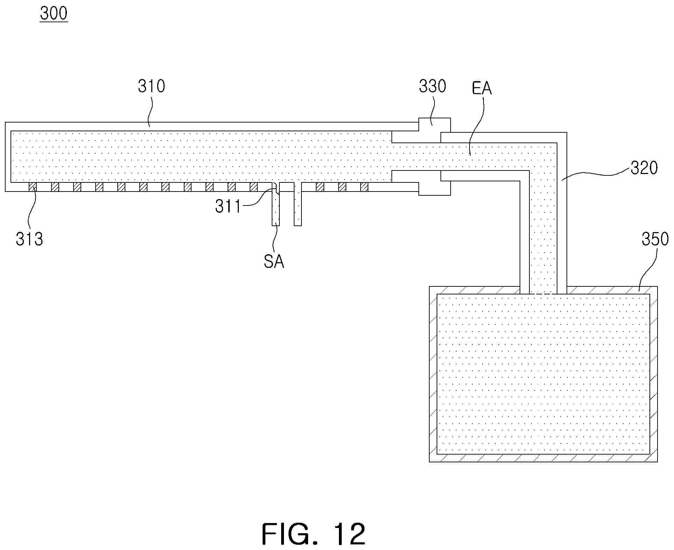

FIG. 11 is a schematic diagram of a battery module in a normal state based on an embodiment. FIG. 12 is a schematic diagram of a battery module in a state of combustion based on an embodiment.

Referring to FIGS. 11 and 12, a battery module 300 may include a support member 310, a fire extinguishing agent supply member 320, a fastening member 330, and a fire extinguishing agent tank 350. At least a portion of the descriptions of the battery module 300, the support member 310, the fire extinguishing agent supply member 320, and the fastening member 330 of FIGS. 3, 4, 5, and/or 6 may be applied to the battery module 300, the support member 310, the fire extinguishing agent supply member 320, and the fastening member 330 of FIGS. 11 and 12. For ease of description, certain components of the battery module 300, such as a cell unit 200 and an end plate 340, are omitted from FIGS. 11 and 12.

In an embodiment (e.g., FIGS. 11 and 12), a fire extinguishing agent EA of the battery module 300 may be positioned in the support member 310, the fire extinguishing agent supply member 320, and the fire extinguishing agent tank 350. The battery module 300 of FIGS. 11 and 12 may be referred to as a first-type or a wet-type battery module 300.

The battery module 300 may include a fire extinguishing agent tank 350, accommodating a portion of the fire extinguishing agent EA. The fire extinguishing agent tank 350 may accommodate at least a portion of the fire extinguishing agent EA. The extinguishing agent EA is not particularly limited as long as it includes materials capable of extinguishing the fire. For example, the fire extinguishing agent EA may include at least one of water, insulation cooling water, a foam extinguishing agent, a powder extinguishing agent, or fire extinguishing gas.

The fire extinguishing agent tank 350 may be connected to the fire extinguishing agent supply member 320. For example, the fire extinguishing agent EA, accommodated in the fire extinguishing agent tank 350, may pass through the fire extinguishing agent supply member 320, and may be transferred to the support member 310.

In an embodiment (e.g., FIGS. 11 and 12), the battery module 300 may include a cover member 313 disposed in a spraying hole 311 of the support member 310. For example, the support member 310 may include a plurality of spraying holes 311 and a plurality of cover members 313 disposed in the plurality of spraying holes 311, respectively. In a state in which no fire occurs in the battery module 300 (e.g., a normal state of FIG. 11), the support member 310 and the fire extinguishing agent supply member 320 may accommodate at least a portion of the fire extinguishing agent EA. The cover member 313 may seal the spraying hole 311 of the support member 310. The cover member 313 may prevent leakage of the fire extinguishing agent EA through the spraying hole 311 of the support member 310. In an embodiment, the cover member 310 may be referred to as a sealing member.

The cover member 313 may seal the spraying hole 311 in a normal state (e.g., in a state where no fire occurs in the battery module 300, see FIG. 11).

The cover member 313 may be melted before the support member 310 in a state (e.g., FIG. 12) in which a fire occurs in the battery module 300 (e.g., the battery cell 100 of FIG. 2). As the cover member 313 is melted, the fire extinguishing agent EA positioned in the support member 310 may be sprayed onto the outside of the support member 310 through the spraying hole 311 of the support member 313. A first melting point of the cover member 313 may be lower than a second melting point of the support member 310. In an embodiment, the cover member 313 may include a low melting point material (e.g., a polymer), and the support member 310 may include metal (e.g., aluminum or stainless steel). The first melting point of the cover member 313 may be about 100 degrees to about 300 degrees.

In an embodiment, the plurality of cover members 313 may be melted from the cover member 313 adjacent to the battery cell 100 in which the fire occurs, and may concentrate the fire extinguishing agent EA to a point at which the fire occurs. For example, at least a portion of the fire extinguishing agent EA may be sprayed onto the outside of the support member 310 through the spraying hole 311 opened by the melted cover member 313, among the plurality of cover members 313. One portion of the fire extinguishing agent EA, sprayed from the support member 310, may be referred to as a spray agent SA. The spray agent SA may be concentrated to the point at which the fire occurs, thereby increasing fire extinguishing efficiency.

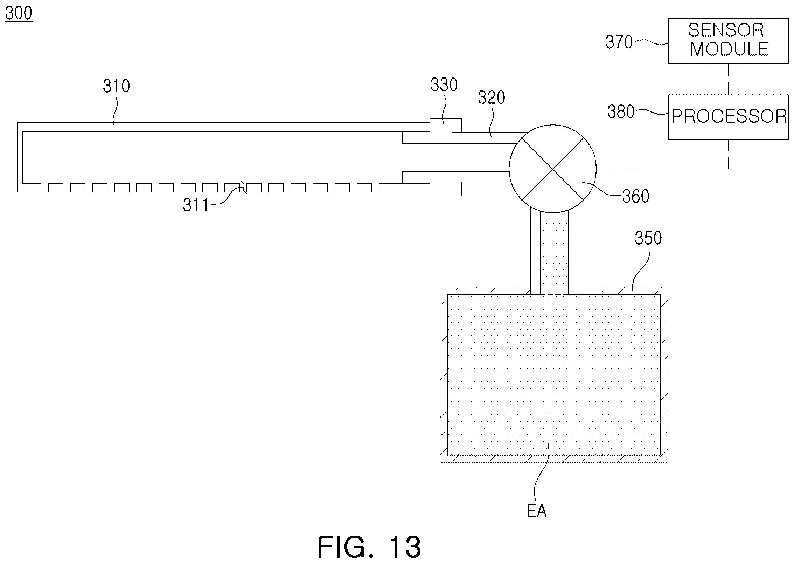

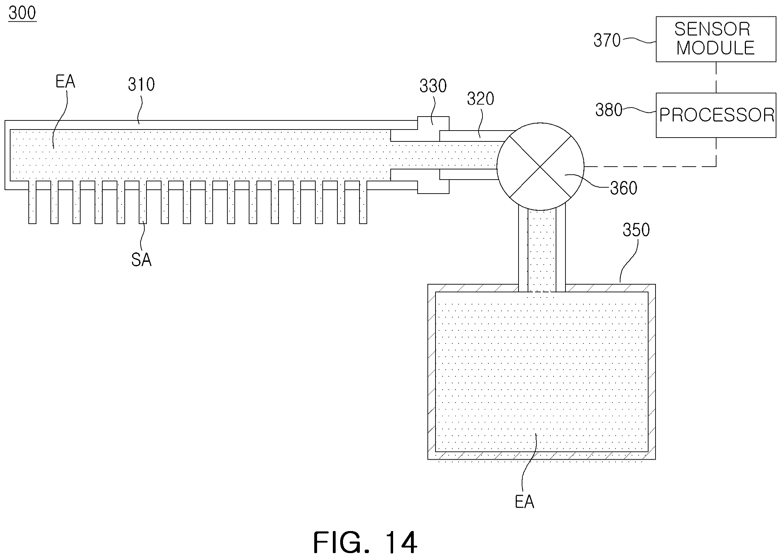

FIG. 13 is a schematic diagram of a battery module in a normal state based on an embodiment. FIG. 14 is a schematic diagram of a battery module in a state of combustion based on an embodiment.

Referring to FIGS. 13 and 14, a battery module 300 may include a support member 310, a fire extinguishing agent supply member 320, a fastening member 330, a fire extinguishing agent tank 350, a valve 360, a sensor module 370, and a processor 380.

At least a portion of the descriptions of the battery module 300, the support member 310, the fire extinguishing agent supply member 320, and the fastening member 330 of FIGS. 3, 4, 5, and/or 6 may be applied to the battery module 300, the support member 310, the fire extinguishing agent supply member 320, and the fastening member 330 of FIGS. 11 and 12. For ease of description, certain components of the battery module 300, such as a cell unit 200 and an end plate 340, are omitted from FIGS. 13 and 14.

In an embodiment (e.g., FIGS. 13 and 14), a fire extinguishing agent EA of the battery module 300 may be positioned in the fire extinguishing agent tank 350. The battery module 300 of FIGS. 13 and 14 may be referred to as a second-type or a dry-type battery module 300.

The battery module 300 may include a fire extinguishing agent tank 350, accommodating the fire extinguishing agent EA. The fire extinguishing agent tank 350 may accommodate at least a portion of the fire extinguishing agent EA. The extinguishing agent EA is not particularly limited as long as it includes materials capable of extinguishing the fire. For example, the fire extinguishing agent EA may include at least one of water, insulation cooling water, a foam extinguishing agent, a powder extinguishing agent, or fire extinguishing gas.

The fire extinguishing agent tank 350 may be connected to the fire extinguishing agent supply member 320. For example, the fire extinguishing agent EA, accommodated in the fire extinguishing agent tank 350, may pass through the fire extinguishing agent supply member 320, and may be transferred to the support member 310.

The valve 360 may control a flow of the fire extinguishing agent EA. For example, the valve 360 may be positioned between the fire extinguishing agent tank 350 and the fire extinguishing agent supply member 320 or between a plurality of fire extinguishing agent supply members 320. The fire extinguishing agent EA accommodated in the fire extinguishing agent tank 350 may be transferred to the support member 310 by opening of the valve 360.

The sensor module 370 may detect information on the battery module 300. In an embodiment, the sensor module 370 may detect flames, a spark, and/or a specified type of gas in the battery module 300. In an embodiment, the sensor module 370 may detect a temperature of the battery module 300. Information on the battery module 300 may be presence or absence of flames, a spark, or gas in the battery module 300 and/or a temperature of the battery module 300. In an embodiment, the sensor module 370 may be a fire detector.

The structure in which the sensor module 370 is disposed is only an example. In an embodiment, the sensor module 370 may be mounted on the battery module 300 or disposed in a battery pack (e.g., a battery pack 400 of FIG. 15).

The processor 380 may control opening and closing of the valve 360, based on the information on the battery module 300 detected by the sensor module 370. For example, the processor 380 may open the valve 360 when the temperature, detected by the sensor module 370, has a value greater than or equal to a specified value. For another example, the processor 380 may open the valve 360 when flames, a spark, and/or a specified type of gas is detected by the sensor module 370.

The processor 380 may drive a pump (e.g., a pump 351 of FIG. 15), based on the information detected by the sensor module 370. For example, the processor 380 may drive the pump 351 when the temperature, detected by the sensor module 370, has a value greater than or equal to a specified value. For another example, the processor 380 may drive the pump 351 when flames, a spark, and/or a specified type of gas is detected by the sensor module 370.

Due to driving of the pump 351 and opening of the valve 360, the fire extinguishing agent EA, positioned in the fire extinguishing agent tank 350, may be transferred to the support member 310. The fire extinguishing agent EA, transferred to the support member 310, may be transferred to the outside of the support member 310 (e.g., the cell unit 200 of FIG. 2) through the spraying hole 311 of the support member 310. One portion of the fire extinguishing agent EA, sprayed from the spraying hole 311 of the support member 310, may be referred to as a spray agent SA.

The structure in which the processor 380 is disposed may be exemplary. In an embodiment, the processor 380 may be mounted on the battery module 300. In an embodiment, the processor 380 may be disposed in a pack frame (e.g., a pack frame 410 of FIG. 15). For example, the processor 380 may be included in a battery management system (BMS). In an embodiment, the processor 380 may be positioned on the outside of the battery pack 400. For example, the processor 380 may be mounted in a vehicle including the battery pack 400 or an energy storage system including the battery pack 400.

In an embodiment, the battery module 300 illustrated in FIGS. 13 and 14 may be used in combination with the battery module 300 illustrated in FIGS. 11 and 12. For example, in an embodiment, the battery module 300 of FIGS. 13 and 14 may include a cover member (e.g., the cover member 313 of FIG. 11), positioned in the spraying hole 311 of the support member 310. In an embodiment, the battery module 300 of FIGS. 11 and 12 may include the valve 360, the sensor module 370, and/or the processor 380 of FIGS. 13 and 14.

Fig. 15 is a perspective view of a battery pack based on an embodiment.

Referring to FIG. 15 together with FIG. 4, a battery pack 400 may include a pack frame 410, a pack cover 420, a fire extinguishing agent supply member 320, and a fire extinguishing agent tank 350.

The battery pack 400 may accommodate a plurality of battery modules (e.g., the battery module 300 of FIG. 4). For example, the battery pack 400 may include a pack frame 410 accommodating the plurality of battery modules 300, and a pack cover 420 covering the pack frame 410 and the plurality of battery modules 300. The pack frame 410 and the pack cover 420 may form at least a portion of an exterior of the battery pack 400.

The fire extinguishing agent supply member 320 may provide a path through which a refrigerant (e.g., a fire extinguishing agent) flows. For example, the fire extinguishing agent supply member 320 may be connected to the fire extinguishing agent tank 350 and/or the pump 351. The fire extinguishing agent supply member 320 may be connected to a support member (e.g., the support member 310 of FIG. 4) of the battery module 300 positioned in the pack frame 410.

In an embodiment, the fire extinguishing agent supply member 320 may be provided as a plurality of fire extinguishing agent supply members 320. For example, the fire extinguishing agent supply member 320 may include at least a portion of a first flow path 325 connected to the pump 351 and the battery module 300, a second flow path 326 connected to the battery module 300 and the fire extinguishing agent tank 350, and a third flow path 327 connected to the pump 351 and the fire extinguishing agent tank 350.

A position of the fire extinguishing agent tank 350 may be selective. For example, in an embodiment, the battery module 300 may include a fire extinguishing agent tank 350. In an embodiment, the fire extinguishing agent tank 350 may be provided as a component separate from the battery module 300. For example, the fire extinguishing agent tank 350 may be included in the battery pack 400, a vehicle (not illustrated), or an energy storage system. The fire extinguishing agent tank 350 may be connected to at least one battery module 300.

The pump 351 may generate a pressure difference for a flow of a refrigerant (e.g., the fire extinguishing agent EA of FIG. 11). For example, the pump 351 may generate a pressure for movement of the fire extinguishing agent from the fire extinguishing agent tank 350 to the fire extinguishing agent supply member 320. The pump 351 may increase pressure such that the refrigerant is circulated in the fire extinguishing agent supply member 320. The pump 351 may be connected to the fire extinguishing agent supply member 320 and/or the fire extinguishing agent tank 350. The position of the pump 351 discussed above is only an example.

The disclosed technology can be implemented in making battery packs with rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery pack used in various power sources and power supplies, thereby mitigating climate changes in connection with uses of power sources and power supplies. Battery packs based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document. For example, the disclosed technology may be implemented by omitting certain components from the above-described embodiments, and the various embodiments may be combined with each other.

## Claims

1. A battery module comprising:
a plurality of cell units, each of the plurality of cell units including a battery cell and a cell housing that surrounds at least a portion of the battery cell, the cell housing including one or more through-holes;
one or more support members configured to support the plurality of cell units; and
a fire extinguishing agent supply member coupled to the one or more support members and configured to supply a fire extinguishing agent to the one or more support members,
wherein each of the one or more support members includes: an internal conduit to carry and move the fire extinguishing agent, a spraying hole formed on a side of the one or more support members to allow the fire extinguishing agent to exit and disposed in the one or more through-holes of a corresponding cell housing of a corresponding cell unit.

2. The battery module of claim 1, further comprising:
one or more fastening members configured to connect the one or more support members to the fire extinguishing agent supply member,
wherein each of the one or more fastening members includes:
an external surface including at least a portion that includes a thread in contact with each of the one or more support members, and
an internal surface in contact with the fire extinguishing agent supply member, the internal surface forming a fluid path hole.

3. The battery module of claim 1 or 2, wherein each of the one or more fastening members includes:
a head portion surrounding at least a portion of the extinguishing agent supply member; and
a protrusion portion extending from the head portion and inserted into the internal space of each of the one or more support members.

4. The battery module of anyone of preceding claims, wherein the fire extinguishing agent supply member includes an inlet configured to receive the fire extinguishing agent from outside the battery module, and an outlet configured to supply the fire extinguishing agent to the one or more support members.

5. The battery module of anyone of preceding claims, further comprising:
a fire extinguishing agent tank connected to the fire extinguishing agent supply member and configured to accommodate the fire extinguishing agent.

6. The battery module of anyone of preceding claims, further comprising:
a cover member disposed in the spraying hole,
wherein a first melting point of the cover member is lower than a second melting point of the one or more support members.

7. The battery module of claim 6, wherein the one or more support members and the fire extinguishing agent supply member are configured to accommodate at least a portion of the fire extinguishing agent in a normal state in which no fire is present in the battery cell.

8. The battery module of anyone of preceding claims, further comprising:
a valve connected to the fire extinguishing agent supply member and configured to control a flow of the fire extinguishing agent from the fire extinguishing agent supply member to the one or more support members.

9. The battery module of claim 8, further comprising:
a sensor module configured to detect information on the battery module, including at least one of: flames, sparks, or gas in the battery module or a temperature of the battery module; and
a processor configured to control opening and closing of the valve based on the information on the battery module detected by the sensor module.

10. The battery module of anyone of preceding claims, wherein the fire extinguishing agent flows through the fire extinguishing agent supply member, the internal space, and the spraying hole to reach the battery cell.

11. The battery module of anyone of preceding claims, further comprising:
an end plate disposed at both sides of each of the plurality of cell units, the end plate including a fastening hole configured to accommodate the one or more support members.

12. The battery module of anyone of preceding claims,
wherein the cell housing includes a first cell housing portion and a second cell housing portion spaced apart from the first cell housing portion,
wherein the one or more through-holes include at least one first through-hole formed in the first cell housing portion, and at least one second through-hole formed in the second cell housing portion, and
wherein the one or more support members include at least one first support member inserted into the at least one first through-hole, and at least one second support member inserted into the at least one second through-hole.

13. The battery module of anyone of preceding claims,
wherein the battery cell includes: an electrode assembly; a pouch including an electrode accommodation portion configured to accommodate the electrode assembly and a sealing portion configured to seal at least a portion of a circumference of the electrode accommodation portion; and an electrode tab connected to the electrode assembly, and
wherein the cell housing surrounds at least a portion of the pouch.

14. A battery pack comprising:
a plurality of battery modules; and
a pack frame configured to accommodate the plurality of battery modules,
wherein each of the plurality of battery modules includes:
a plurality of cell units, each of the plurality of cell units including a battery cell and a cell housing that surrounds at least a portion of the battery cell and includes one or more through-holes;
one or more support members inserted into the one or more through-holes and configured to support the plurality of cell units; and
a fire extinguishing agent supply member connected to the one or more support members and configured to supply a fire extinguishing agent to the one or more support members,
wherein each of the one or more support members includes: a spraying hole positioned in the one or more through-holes and configured to guide the fire extinguishing agent to the cell unit; and an internal space connected to the spraying hole and configured to provide a path for the fire extinguishing agent.

15. The battery pack of claim 14, further comprising:
a fire extinguishing agent tank connected to the fire extinguishing agent supply member and configured to accommodate the fire extinguishing agent; and
a pump configured to generate pressure to move the fire extinguishing agent from the fire extinguishing agent tank to the fire extinguishing agent supply member.
